# FASCICULE DE BREVET EUROPEEN

(11) **EP 2 248 452 B1**
(45) Date de publication et mention de la délivrance du brevet: **13.02.2013**
(21) Numéro de dépôt: 10356016.5
(22) Date de dépôt: 04.05.2010
(51) Int. Cl.: A47J 37/07, A47J 36/16, A47J 37/00

(54) **Appareil de cuisson avec moyen de remuage**
Kochgerät mit Mittel zum Umrühren
Cooking appliance with stirring means

(30) Priorité: 05.05.2009 FR 0902161
(43) Date de publication de la demande: 10.11.2010
(73) Titulaire: Seb S.A., 69130 Ecully (FR)
(72) Inventeur: Bizard, Jean-Claude, 21121 Fontaine les Dijon (FR)
(74) Mandataire: Kiehl, Hubert

(56) Documents cités:
- EP-A- 0 995 385
- US-A1- 2005 223 906

## Description

La présente invention concerne le domaine technique des appareils électriques de cuisson comportant un moyen de remuage agencé dans un moyen de réception d'aliments.

La présente invention concerne notamment, mais non exclusivement, les appareils électriques prévus pour le brassage et la cuisson d'aliments en bâtonnets, tels que les frites, comportant un moyen de remuage disposé dans une cuve agencée dans un boîtier logeant un dispositif de chauffage à air chaud, dans lesquels le moyen de remuage et la cuve sont conçus pour être mis en mouvement l'un part rapport à l'autre, de manière à brasser et remuer les aliments et la matière grasse au sein de la cuve. Le document WO 2006/000699 divulgue de tels appareils de cuisson.

Le document WO 2007/088279 divulgue un appareil de cuisson du type précité comportant une pale de remuage entraînée en rotation dans un récipient. La géométrie de la pale de remuage et le mouvement de la pale de remuage dans le récipient contribuent à réorienter les frites les unes par rapport aux autres. Les différentes faces des frites peuvent ainsi entrer successivement en contact avec le fond de la cuve susceptible de recueillir de la matière grasse, les frites disposées sur le dessus de la cuve étant davantage exposées au flux d'air chaud. Ces dispositions permettent d'obtenir une meilleure homogénéité de cuisson. Un inconvénient de la construction précitée réside toutefois dans l'élévation de l'amas de frites repoussé par la pale de remuage. Cet effet peut conduire à dimensionner la cuve en fonction de la recette exigeant l'espace le plus important, au détriment de la compacité de l'appareil. Cet effet peut aussi conduire à réduire la quantité d'aliments préparés pour la recette exigeant l'espace le plus important, au détriment de la capacité de l'appareil. De plus, la pale de remuage est mobile par rapport à un obstacle agencé dans la cuve. Cet obstacle permettant de bloquer partiellement l'amas de frites repoussé par la pale de remuage contribue à renforcer l'élévation de l'amas de frites repoussé par la pale de remuage.

Un objet de la présente invention est d'améliorer la capacité et/ou la compacité d'un appareil du type précité.

Un autre objet de la présente invention est de conserver un moyen de réception d'aliments présentant une construction simple.

Ces objets sont atteints avec un appareil de cuisson d'aliments comprenant un moyen de réception prévu pour recevoir les aliments, un moyen de remuage disposé au sein du moyen de réception, le moyen de réception et le moyen de remuage étant conçus pour être animés d'un mouvement relatif de rotation, le moyen de réception présentant une ouverture supérieure, un obstacle latéral étant positionné dans le moyen de réception en périphérie par rapport au moyen de remuage, du fait qu'un élément d'extension périphérique s'élève au dessus d'une partie périphérique du moyen de réception et ménage au moins un passage supérieur s'étendant au dessus de l'ouverture supérieure, l'élément d'extension périphérique présentant une face inférieure inclinée s'élevant en direction d'une zone centrale du moyen de réception.

Lors du remuage d'aliments en bâtonnets tels que les frites, la hauteur de l'amas d'aliments formé par le mouvement relatif de rotation du moyen de remuage et du moyen de réception peut être contrôlée par l'élément d'extension périphérique. Ainsi lorsque l'obstacle latéral bloque ou dévie une partie de l'amas de frites, la face inférieure inclinée de l'élément d'extension périphérique limite la déformation de l'amas de frites vers le haut et repousse les frites formant la partie supérieure de l'amas vers l'intérieur du réceptacle. La hauteur du moyen de réception peut de ce fait être limitée. De plus, le brassage ou le remuage des frites est favorisé par les mouvements générés par la face inférieure inclinée de l'élément d'extension périphérique, complétant les mouvements générés par l'obstacle, sous l'effet du moyen de remuage. La face inférieure inclinée permet de déplacer la partie supérieure de l'amas d'aliments vers la zone centrale du moyen de réception. Ainsi le débordement de l'amas d'aliments hors du moyen de réception peut être mieux contrôlé. Ces dispositions permettent d'utiliser un moyen de réception de hauteur plus limitée pour préparer une même quantité d'aliments. Ces dispositions permettent aussi de préparer une quantité plus importante d'aliments sans augmenter l'encombrement de l'appareil. De plus, le remuage d'un amas d'aliment en bâtonnets est aussi amélioré grâce au mouvement additionnel procuré par la face inférieure inclinée. Le moyen de réception peut conserver une forme simple aisément obtenue par emboutissage, ce qui permet de limiter les coûts de fabrication de l'appareil.

Avantageusement, l'élément d'extension périphérique forme une portion annulaire augmentant la hauteur du moyen de réception. Cette disposition permet également de mieux contenir les aliments dans le moyen de réception.

Ces objets sont atteints également avec un appareil de cuisson d'aliments comprenant un moyen de réception prévu pour recevoir les aliments, un moyen de remuage disposé au sein du moyen de réception, le moyen de réception et le moyen de remuage étant conçus pour être animés d'un mouvement relatif de rotation, le moyen de réception présentant une ouverture supérieure, un obstacle latéral étant positionné dans le moyen de réception en périphérie par rapport au moyen de remuage, du fait qu'un élément d'extension périphérique est monté dans le prolongement de l'ouverture supérieure du moyen de réception, l'élément d'extension périphérique ménageant au moins un passage supérieur s'étendant au dessus de l'ouverture supérieure, l'élément d'extension périphérique formant une portion annulaire augmentant la hauteur du moyen de réception.

L'élément d'extension périphérique permet ainsi de mieux contenir les aliments dans le moyen de réception.

De préférence, cette portion annulaire s'étend sur au moins 1/6^{e} de la circonférence du moyen de réception.

Avantageusement alors, pour un meilleur contrôle du remuage, l'élément d'extension périphérique s'étend sur plus de la moitié de la périphérie du moyen de réception.

Avantageusement encore, l'élément d'extension périphérique peut former un anneau, si désiré avec le moyen de réception.

Avantageusement, le moyen de réception est agencé dans un boîtier définissant un logement. Cette disposition permet notamment d'éviter un contact direct de l'utilisateur avec le moyen de réception. L'élément d'extension périphérique permet aussi d'éviter que les aliments n'entrent en contact avec le boîtier.

Selon une construction avantageuse facilitant l'accès au moyen de réception, le boîtier comporte un corps surmonté d'un couvercle.

Avantageusement alors, l'élément d'extension périphérique s'étend au moins partiellement à l'intérieur du couvercle.

Avantageusement encore, le couvercle s'étend à distance d'un bord supérieur du moyen de réception. Le couvercle n'étant pas apte contenir les aliments dans le moyen de réception, l'élément d'extension périphérique permet ainsi d'éviter que les aliments ne franchissent le bord supérieur du moyen de réception.

Selon une forme de réalisation avantageuse, le moyen de réception est monté amovible par rapport au boîtier. L'élément d'extension périphérique permet ainsi de mieux contenir les aliments dans le moyen de réception lorsque le moyen de réception est déplacé par rapport au boîtier.

Selon un mode de réalisation préféré, l'élément d'extension périphérique est monté sur le moyen de réception.

Avantageusement encore, pour faciliter le nettoyage de l'appareil, l'élément d'extension périphérique est monté amovible par rapport au moyen de réception.

Avantageusement alors, ledit appareil comporte des moyens de retenue plaquant l'élément d'extension périphérique contre le moyen de réception. Cette disposition permet d'obtenir une bonne étanchéité entre l'élément d'extension périphérique et le moyen de réception.

Selon une construction avantageuse, l'élément d'extension périphérique présente une gorge interne prévue pour recevoir une collerette extérieure du moyen de réception. Cette disposition permet de simplifier la construction du moyen de réception ainsi que la construction de l'élément d'extension périphérique.

Avantageusement alors, l'élément d'extension périphérique comporte deux parties mobiles l'une par rapport à l'autre. Cette disposition permet d'utiliser des matériaux rigides pour réaliser l'élément d'extension périphérique tout en favorisant la mise en place et le retrait de l'élément d'extension périphérique.

Avantageusement encore, le moyen de remuage comprend un moyen de soulèvement des aliments. Cette disposition permet notamment de favoriser le remuage d'aliments en bâtonnets tels que les frites.

Selon une construction avantageuse, l'élément d'extension périphérique est solidaire de l'obstacle latéral. Cette disposition permet de simplifier la réalisation du moyen de réception.

Avantageusement encore, l'élément d'extension périphérique s'étend entre le moyen de soulèvement des aliments et l'obstacle latéral lorsque le moyen de soulèvement des aliments est disposé en regard de l'obstacle latéral. Cette disposition permet de mieux contrôler le débordement des aliments hors du moyen de réception au voisinage de l'obstacle latéral.

Avantageusement encore, l'élément d'extension périphérique s'étend au-delà de l'obstacle latéral par rapport au moyen de soulèvement des aliments lorsque le moyen de soulèvement des aliments est disposé en regard de l'obstacle latéral. Cette disposition permet de mieux contrôler le débordement des aliments hors du moyen de réception au voisinage de l'obstacle latéral.

Selon une construction avantageuse, le moyen de réception est formé par une cuve comportant un fond et une paroi latérale. Le moyen de réception peut ainsi contenir de la matière liquide ou semi-liquide. Les aliments peuvent ainsi être brassés avec une quantité plus ou moins importante de matière liquide ou semi-liquide, telle que par exemple de l'huile, de la matière grasse fondue ou de la sauce.

Avantageusement alors, le fond est incliné vers le bas en direction de la paroi latérale. Cette disposition permet également de favoriser le remuage des aliments.

Selon un mode de réalisation, l'appareil comporte un moyen de chauffe générant un flux chauffant entrant dans le moyen de réception par l'ouverture supérieure. L'élément d'extension périphérique ménageant au moins un passage supérieur au dessus de l'ouverture supérieure permet de mieux contenir les aliments dans le moyen de réception, tout en favorisant l'entrée du flux chauffant dans le moyen de réception. D'autres types de moyens de chauffe peuvent toutefois être envisagés, notamment un moyen de chauffe agencé sous ou dans le moyen de réception.

L'invention sera mieux comprise à l'étude d'un exemple de réalisation et de deux variantes, pris à titre nullement limitatif, illustrés dans les figures annexées, dans lesquelles :
- la figure 1 est une vue en coupe longitudinale d'un exemple de réalisation d'un appareil selon l'invention,
- la figure 2 est une vue en perspective en position ouverte de l'appareil représenté sur la figure 1, dans lequel le moyen de réception a été retiré,
- la figure 3 est une vue en perspective du moyen de remuage prévu pour être agencé dans le moyen de réception,
- la figure 4 est une vue en perspective du moyen de réception,
- la figure 5 est une vue en perspective d'un élément d'extension périphérique en position dépliée,
- la figure 6 est une vue en perspective de l'articulation de l'élément d'extension périphérique illustré sur la figure 5,
- la figure 7 est une vue partielle en coupe verticale montrant le montage de l'élément d'extension périphérique illustré sur les figures 5 et 6 sur le moyen de réception illustré sur la figure 4,
- la figure 8 est une vue en perspective montrant l'élément d'extension périphérique monté sur le moyen de réception recevant le moyen de remuage,
- la figure 9 est une vue partielle en perspective du moyen de réception, montrant une poignée rabattable ainsi que des moyens de retenue de l'élément d'extension périphérique,
- la figure 10 est une vue partielle en perspective du moyen de réception, montrant une poignée rabattable ainsi qu'une variante de réalisation des moyens de retenue de l'élément d'extension périphérique,
- la figure 11 est une vue en perspective montrant une variante de réalisation de l'élément d'extension périphérique monté sur le moyen de réception recevant le moyen de remuage.

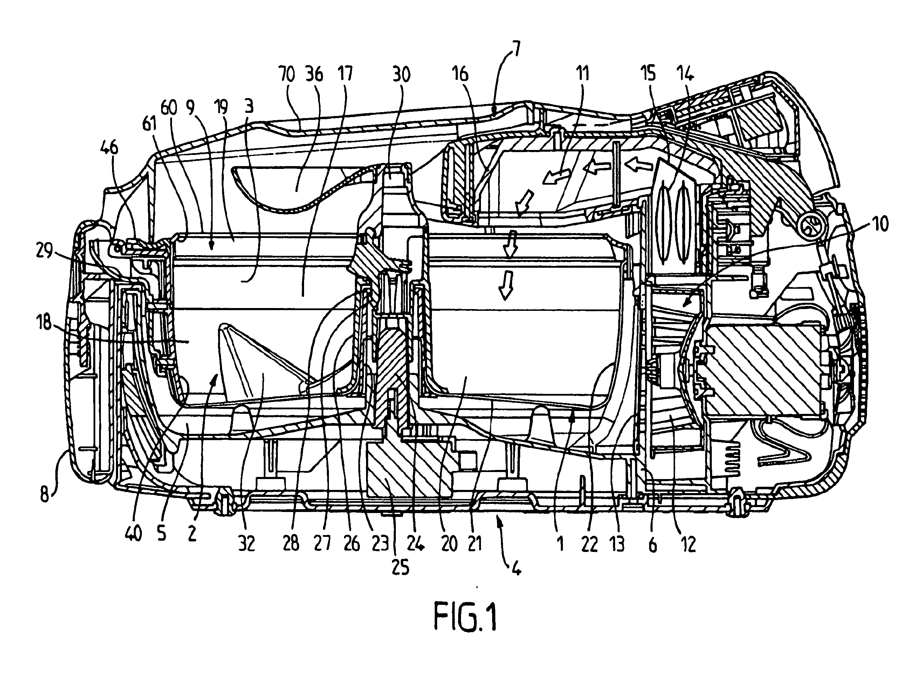

L'appareil de cuisson représenté à la figure 1 comprend un moyen de réception 1 prévu pour recevoir les aliments, un moyen de remuage 2 disposé au sein du moyen de réception 1. Le moyen de réception 1 présente une ouverture supérieure 3. Le moyen de réception 1 et le moyen de remuage 2 sont conçus pour être animés d'un mouvement relatif de rotation.

Conformément à l'invention, l'appareil comporte un élément d'extension périphérique 9.

L'élément d'extension périphérique 9 s'élève au dessus d'une partie périphérique 18 du moyen de réception 1 et ménage au moins un passage supérieur 19 s'étendant au dessus de l'ouverture supérieure 3. L'élément d'extension périphérique 9 présente une face inférieure inclinée 61 s'élevant en direction d'une zone centrale 17 du moyen de réception 1.

L'élément d'extension périphérique 9 est monté dans le prolongement de l'ouverture supérieure 3 du moyen de réception 1 et ménage au moins un passage supérieur 19 s'étendant au dessus de l'ouverture supérieure 3. L'élément d'extension périphérique 9 forme une portion annulaire augmentant la hauteur du moyen de réception 1.

Plus particulièrement, le moyen de réception 1 est agencé dans un boîtier 4. Le boîtier 4 définit un logement 5 dans lequel est agencé le moyen de réception 1. Le boîtier 4 comporte un corps 6 surmonté d'un couvercle 7. Le couvercle 7 comporte une partie transparente ou translucide 70 agencée au dessus du moyen de réception 1.

Tel que bien visible sur la figure 1, le couvercle 7 s'étend à distance d'un bord supérieur du moyen de réception 1.

L'appareil de cuisson comporte un moyen de chauffe 10. Tel que représenté sur la figure 1, le moyen de chauffe 10 génère un flux chauffant 11 entrant dans le moyen de réception 1 par l'ouverture supérieure 3.

Plus particulièrement, l'appareil de cuisson comporte un ventilateur 12 prévu pour aspirer l'air présent dans le logement 5 par une admission d'air 13 et pour propulser l'air sur un élément chauffant 14 agencé dans un conduit 15 débouchant dans le logement 5. Une partie 16 du conduit 15 est ménagée dans le couvercle 7.

Plus particulièrement, le moyen de réception 1 est formé par une cuve 20 comportant un fond 21 et une paroi latérale 22. Tel que bien visible sur la figure 1, le fond 21 est incliné vers le bas en direction de la paroi latérale 22. La cuve 20 présente une ouverture centrale 23 prévue pour le passage d'un axe d'entraînement 24 entraîné en rotation par un moteur 25. Une cheminée 26 est montée sur l'ouverture centrale 23. Le moyen de remuage 2 est monté sur l'axe d'entraînement 24. Le moyen de remuage 2 présente un organe d'accrochage 27 prévu pour venir en prise avec un organe de retenue 28 ménagé dans la cheminée 26. La cuve 20 est avantageusement réalisée en matériau métallique, de préférence en matériau métallique revêtu ou en acier inoxydable. Le moyen de réception 1 comporte un support 29 fixé à la cuve 20. Le moyen de réception 1 comporte une poignée 8. La poignée 8 est par exemple montée articulée sur le support 29.

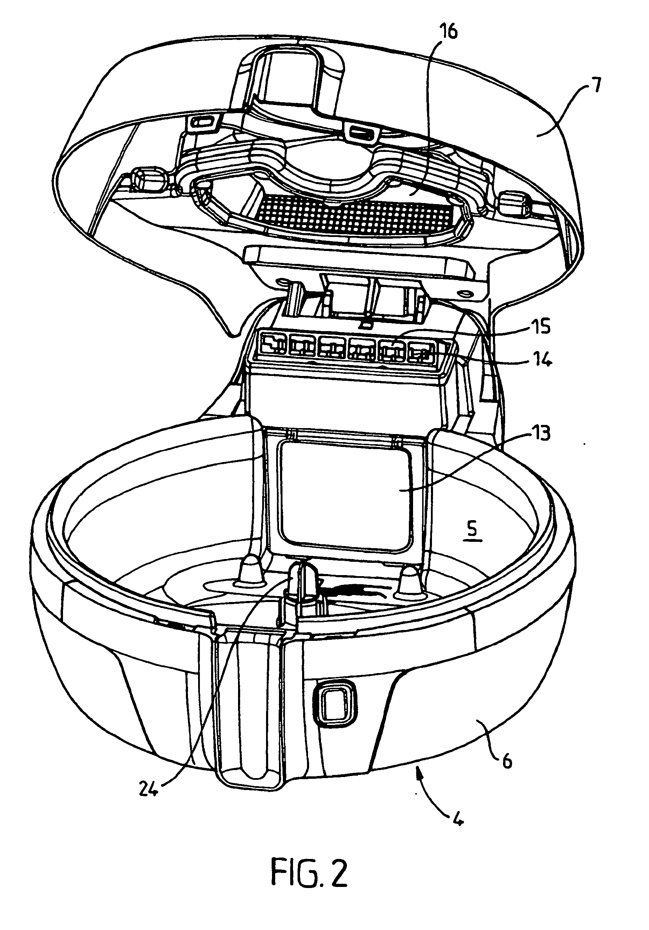

Le moyen de réception 1 est monté amovible par rapport au boîtier 4, la figure 2 illustrant le boîtier 4 avec le couvercle 7 ouvert en l'absence du moyen de réception 1.

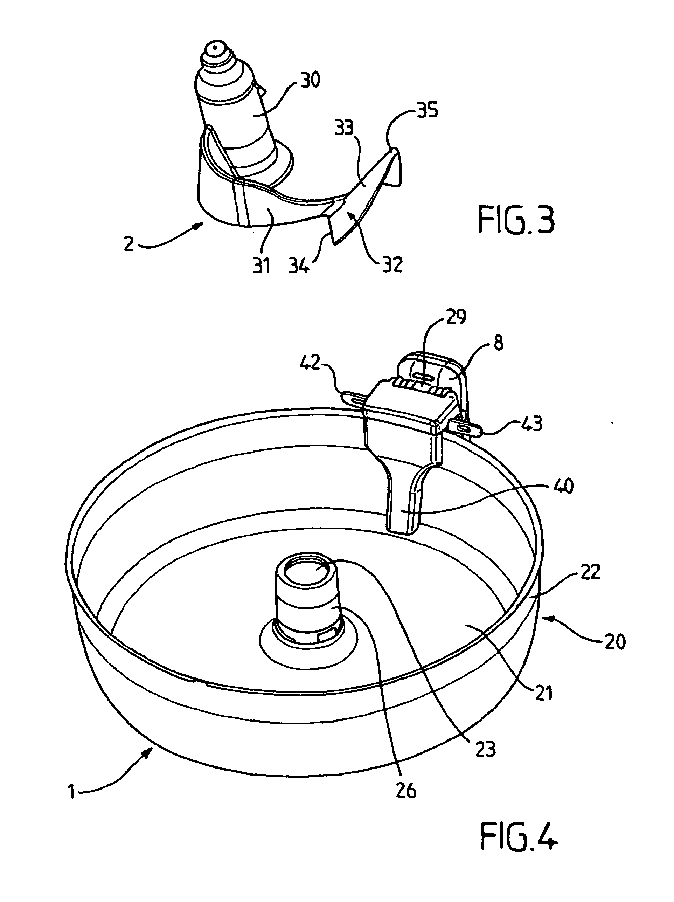

Le moyen de remuage 2 illustré sur la figure 3 comporte un moyeu 30 prévu pour coiffer la cheminée 26, et un bras 31 issu du moyeu 30. Le moyen de remuage 2 comprend un moyen de soulèvement des aliments 32 formé par une surface fuyante 33 inclinée par rapport à l'axe du moyeu 30. La largeur de la surface fuyante 33 diminue depuis une partie inférieure avant 34 vers une partie supérieure arrière 35. Une cuiller 36 est montée amovible sur l'extrémité supérieure du moyeu 30.

Tel que visible sur la figure 4, un obstacle latéral 40 est positionné dans le moyen de réception 1. Plus particulièrement, l'obstacle latéral 40 est issu du support 29. L'obstacle latéral 40 s'étend sur au moins une partie de la hauteur de la paroi latérale 22 de la cuve 20.

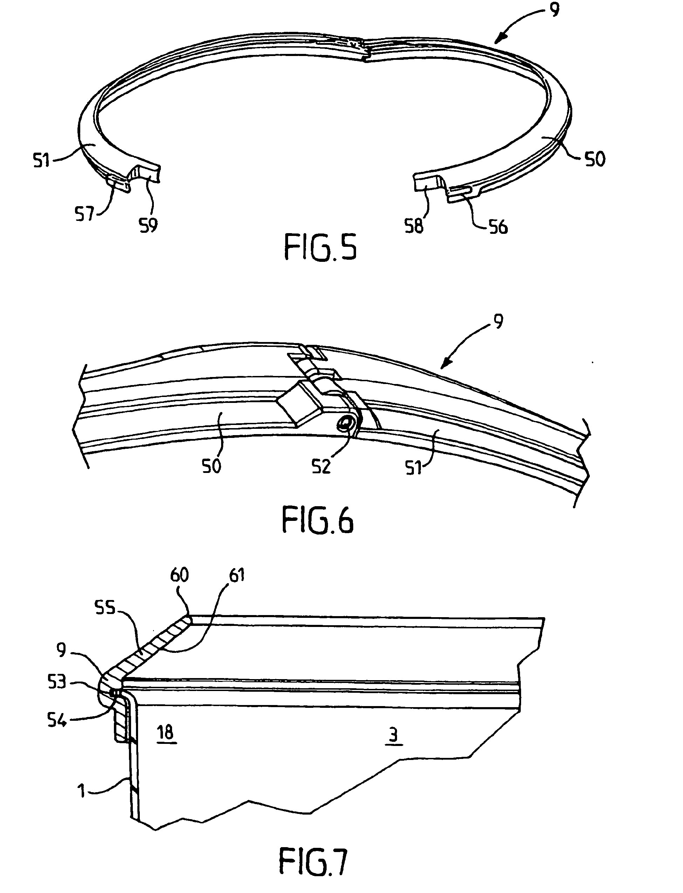

La figure 5 illustre l'élément d'extension périphérique 9 en position ouverte. L'élément d'extension périphérique 9 est monté amovible par rapport au moyen de réception 1. L'élément d'extension périphérique 9 comporte deux parties 50, 51 mobiles l'une par rapport à l'autre. Tel que mieux visible sur la figure 6, les deux parties 50, 51 sont articulées selon un axe 52.

L'élément d'extension périphérique 9 est avantageusement réalisé dans un matériau polymère prévu pour supporter les températures du flux chauffant 11, pouvant atteindre voire dépasser 200°C pour la réalisation de frites. L'élément d'extension périphérique 9 est par exemple réalisé en PS (polysulfone), PES (polyéthersulfone) ou en PBT (polybutylène téréphtalate).

La figure 7 montre le montage de l'élément d'extension périphérique 9 sur le moyen de réception 1. L'élément d'extension périphérique 9 présente une gorge interne 53 prévue pour recevoir une collerette extérieure 54 du moyen de réception 1. Ainsi l'élément d'extension périphérique 9 repose sur le moyen de réception 1.

L'élément d'extension périphérique 9 présente une lèvre supérieure interne 55. La lèvre supérieure interne 55 présente un bord supérieur 60 s'élevant au dessus du moyen de réception 1. La face inférieure inclinée 61 est formée par la face inférieure de la lèvre supérieure interne 55. Ainsi l'élément d'extension périphérique 9 présente la face inférieure inclinée 61 s'étendant au dessus de la partie périphérique 18 du moyen de réception 1. En d'autres termes, la face inférieure inclinée 61 forme une face disposée en surplomb au dessus de la partie périphérique 18 du moyen de réception 1.

L'inclinaison de la face inférieure inclinée 61 est avantageusement comprise entre 30° et 60° par rapport à la verticale. Tel que représenté sur la figure 7, la face inférieure inclinée 61 présente une inclinaison de 45° par rapport à la verticale.

L'élément d'extension périphérique 9 restreint au moins partiellement l'ouverture supérieure 3 au dessus de la partie périphérique 18 du moyen de réception 1.

L'obstacle latéral 40 est positionné dans le moyen de réception 1 en périphérie par rapport au moyen de remuage 2. Le moyen de remuage 2 est mobile par rapport à l'obstacle latéral 40.

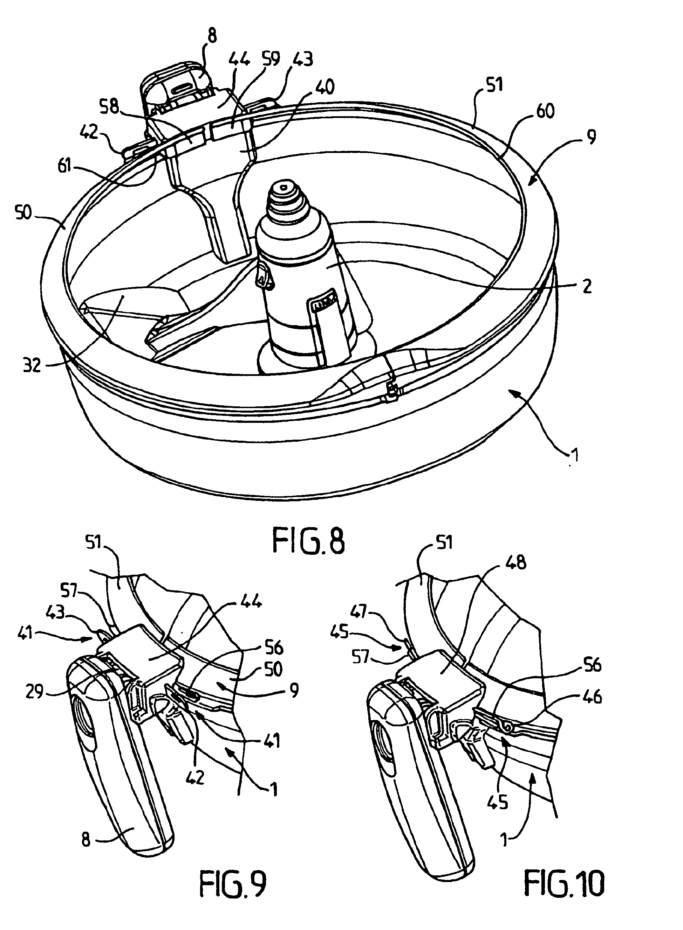

Tel que visible sur la figure 8, l'élément d'extension périphérique 9 s'étend entre le moyen de soulèvement des aliments 32 et l'obstacle latéral 40 lorsque le moyen de soulèvement des aliments 32 est disposé en regard de l'obstacle latéral 40 ; l'élément d'extension périphérique 9 s'étend au-delà de l'obstacle latéral 40 par rapport au moyen de soulèvement des aliments 32 lorsque le moyen de soulèvement des aliments 32 est disposé en regard de l'obstacle latéral 40.

Plus particulièrement, la face inférieure inclinée 61 s'étend entre le moyen de soulèvement des aliments 32 et l'obstacle latéral 40 lorsque le moyen de soulèvement des aliments 32 est disposé en regard de l'obstacle latéral 40. La face inférieure inclinée 61 s'étend au-delà de l'obstacle latéral 40 par rapport au moyen de soulèvement des aliments 32 lorsque le moyen de soulèvement des aliments 32 est disposé en regard de l'obstacle latéral 40.

De manière préférée, l'élément d'extension périphérique 9 est solidaire du moyen de réception 1.

Plus particulièrement, tel que visible sur la figure 8, l'élément d'extension périphérique 9 s'étend sur plus de la moitié de la périphérie du moyen de réception 1. L'élément d'extension périphérique 9 est annulaire et forme un anneau fendu présentant des extrémités 58, 59 ménageant un léger jeu lorsque les parties 50, 51 sont en position fermée.

De préférence, l'appareil comporte des moyens de retenue 41 ; 45 plaquant l'élément d'extension périphérique 9 contre le moyen de réception 1. De préférence les moyens de retenue 41 ; 45 sont déformables élastiquement.

Dans l'exemple de réalisation illustré sur les figures 1 à 9, les moyens de retenue 41 sont formés par deux oeillères 42, 43 issues d'un capot 44 réalisé en matériau souple, par exemple en silicone. Le capot 44 est monté sur le support 29. Les oeillères 42, 43 sont prévues pour venir en prise chacune avec un ergot 56, 57 issu de l'une des parties 50, 51 de l'élément d'extension périphérique 9. Sur la figure 9 les oeillères sont représentées avant leur mise en place sur les ergots 56, 57.

Dans la variante de réalisation illustrée sur la figure 10, les moyens de retenue 45 sont formés par deux organes d'accrochage 46, 47 solidaires du support 29. Un capot 48 peut être monté sur le support 29. Si désiré, le capot 48 peut être réalisé en matériau souple. Les organes d'accrochage 46, 47 sont par exemple formés par des tiges métalliques flexibles s'étendant latéralement hors du support 29. Les organes d'accrochage 46, 47 sont prévus pour venir en prise chacun avec l'un des ergots 56, 57.

De plus, tel que visible sur la figure 8, les extrémités 58, 59 des parties 50, 51 de l'élément d'extension périphérique 9 sont ainsi plaquées contre une paroi latérale du capot 44. Cette disposition permet d'améliorer l'étanchéité au niveau de l'élément d'extension périphérique 9. Dans la variante de la figure 10, les extrémités 58, 59 des parties 50, 51 de l'élément d'extension périphérique 9 sont plaquées contre une paroi latérale du capot 48. Ces dispositions contribuent à augmenter la capacité du moyen de réception 1 surmonté de l'élément d'extension périphérique 9.

L'élément d'extension périphérique 9 forme ainsi avec le moyen de réception 1 un anneau augmentant la hauteur du moyen de réception 1.

L'appareil selon l'invention fonctionne et s'utilise de la manière suivante.

L'utilisateur monte l'élément d'extension périphérique 9 sur le moyen de réception 1 en écartant les deux parties 50, 51 de l'élément d'extension périphérique 9 et en insérant la gorge interne 53 de l'élément d'extension périphérique 9 sur la collerette extérieure 54 du moyen de réception 1.

L'utilisateur solidarise l'élément d'extension périphérique 9 et le moyen de réception 1 en soulevant les organes d'accrochage 46, 47 pour bloquer les ergots 56, 57 ou en étirant les oeillères 42, 43 jusque sur les ergots 56, 57.

L'utilisateur met en place le moyen de réception 1 dans le logement 5 du boîtier 4, monte le moyen de remuage 2 dans le moyen de réception 1, dispose les aliments dans le moyen de réception 1 et ajoute si désiré de la matière grasse ou de l'huile en utilisant la cuiller 36.

L'appareil selon l'invention présente un intérêt particulier pour les aliments taillés en bâtonnets présentant une longueur inférieure à la distance entre le moyeu 30 et la paroi latérale 22 de la cuve 20, tels que notamment les frites.

Lorsque l'utilisateur met en marche l'appareil, les moyens de chauffe 10 génèrent le flux chauffant 11 entrant dans le moyen de réception 1 par l'ouverture supérieure 3, et le moteur 25 entraîne en rotation le moyen de remuage 2 dans le moyen de réception 1.

L'élément d'extension périphérique 9 formant une portion annulaire augmentant la hauteur du moyen de réception 1 permet de contenir une quantité plus importante d'aliments.

Le moyen de remuage 2 contribue à déplacer l'amas de frites et à réorganiser les frites les unes par rapport aux autres. L'élément d'extension périphérique 9 présentant la face inférieure inclinée 61 permet de mieux contenir les frites dans le moyen de réception 1 en rabattant vers la partie centrale du moyen de réception 1 les frites soulevées par le moyen de soulèvement des aliments 32. Le contact des frites avec le couvercle 7 peut ainsi être évité.

Notamment, l'obstacle latéral 40 bloque une partie des frites disposées en périphérie de l'amas de frites et favorise l'élévation de l'amas de frites sous l'action du moyen de soulèvement des aliments 32. L'élément d'extension périphérique 9 forme un organe de rabattement permettant de dévier la partie supérieure de l'amas de frites vers l'intérieur du moyen de réception 1.

De ce fait, un moyen de réception 1 moins haut peut être utilisé pour réaliser une quantité de frites donnée. La compacité de l'appareil est améliorée. De plus, à encombrement égal, une quantité de frites plus importante peut être préparée. La capacité de l'appareil est améliorée.

Le passage supérieur 19 ménagé par l'élément d'extension périphérique 9 au dessus de l'ouverture supérieure 3 permet au flux chauffant 11 d'atteindre les aliments disposés dans le moyen de réception 1. L'élément d'extension périphérique 9 ne gêne pas l'accès aux aliments disposés dans le moyen de réception 1.

L'utilisateur peut retirer le moyen de réception 1 du boîtier 4 en utilisant la poignée 8, en laissant l'élément d'extension périphérique 9 sur le moyen de réception 1.

L'utilisateur peut retirer l'élément d'extension périphérique 9 du moyen de réception 1 en dégageant les oeillères 42, 43 ou les organes d'accrochage 46, 47 des ergots 56, 57, puis en écartant les deux parties 50, 51 de l'élément d'extension périphérique 9. L'utilisateur peut ainsi nettoyer plus facilement le moyen de réception 1 et l'élément d'extension périphérique 9.

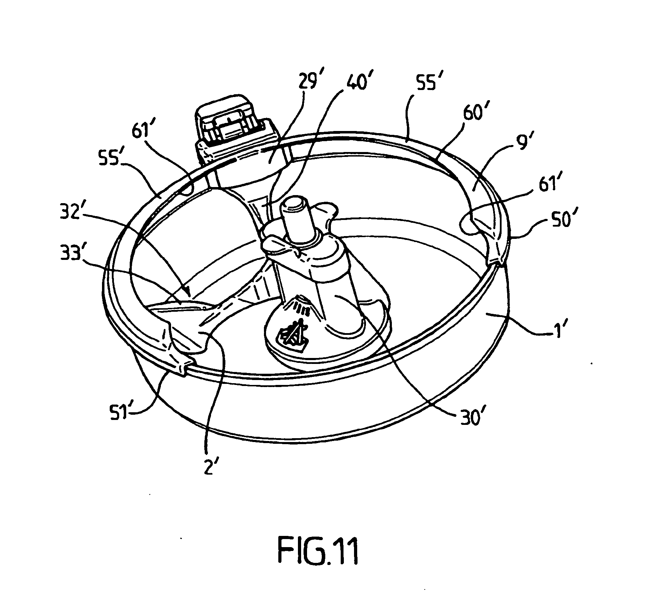

La variante de réalisation illustrée sur la figure 11 illustre également un élément d'extension périphérique 9' ménageant au moins un passage supérieur s'étendant au dessus de l'ouverture supérieure d'un moyen de réception 1'. L'élément d'extension périphérique 9' est monté dans le prolongement de l'ouverture supérieure du moyen de réception 1'. L'élément d'extension périphérique 9' s'élève au dessus d'une partie périphérique du moyen de réception 1'.

La variante de réalisation illustrée sur la figure 11 diffère de l'exemple de réalisation illustré sur les figures 1 à 9 en ce que l'élément d'extension périphérique 9' est solidaire du moyen de réception 1' et en ce que l'élément d'extension périphérique 9' est en portion d'anneau. Tel que visible sur la figure 11, l'élément d'extension périphérique 9' s'étend sur plus de la moitié de la périphérie du moyen de réception 1'.

Plus particulièrement, l'élément d'extension périphérique 9' est issu d'un support 29' fixé au moyen de réception 1'. L'élément d'extension périphérique 9' est solidaire de l'obstacle latéral 40'.

L'élément d'extension périphérique 9' comporte deux branches 50', 51' s'étendant latéralement à partir du support 29'. Chacune des branches 50', 51' comporte une lèvre supérieure interne 55' présentant un bord supérieur 60' s'élevant au dessus d'une partie périphérique du moyen de réception 1'. Ainsi l'élément d'extension périphérique 9' présente une face inférieure inclinée 61' s'élevant en direction d'une zone centrale du moyen de réception 1'.

L'élément d'extension périphérique 9' forme avec le moyen de réception 1' une portion annulaire augmentant la hauteur du moyen de réception 1'.

L'obstacle latéral 40' est positionné dans le moyen de réception 1' en périphérie par rapport au moyen de remuage 2'.

Le moyen de remuage 2' comprend un moyen de soulèvement des aliments 32' formé par une surface fuyante 33' inclinée par rapport à l'axe d'un moyeu 30'.

L'élément d'extension périphérique 9' s'étend entre le moyen de soulèvement des aliments 32' et l'obstacle latéral 40' lorsque le moyen de soulèvement des aliments 32' est disposé en regard de l'obstacle latéral 40'. L'élément d'extension périphérique 9' s'étend au-delà de l'obstacle latéral 40' par rapport au moyen de soulèvement des aliments 32' lorsque le moyen de soulèvement des aliments 32' est disposé en regard de l'obstacle latéral 40'.

Plus particulièrement, la face inférieure inclinée 61' s'étend entre le moyen de soulèvement des aliments 32' et l'obstacle latéral 40' lorsque le moyen de soulèvement des aliments 32' est disposé en regard de l'obstacle latéral 40'. La face inférieure inclinée 61' s'étend au-delà de l'obstacle latéral 40' par rapport au moyen de soulèvement des aliments 32' lorsque le moyen de soulèvement des aliments 32' est disposé en regard de l'obstacle latéral 40'.

A titre de variante, d'autres types de moyens de chauffe 10 peuvent être envisagés, notamment un moyen de chauffe par rayonnement générant un flux chauffant 11 rayonnant entrant dans le moyen de réception 1 ; 1' par l'ouverture supérieure 3, ou encore un moyen de chauffe disposé dans ou sous le moyen de réception 1 ; 1'. Si désiré le moyen de chauffe peut être solidaire du moyen de réception 1 ; 1'.

A titre de variante, le moyen de remuage 2 ; 2' n'est pas nécessairement entraîné en rotation dans le moyen de réception 1 ; 1'. Notamment, le moyen de réception peut être monté entraîné en rotation, si désiré dans un boîtier.

A titre de variante, l'obstacle latéral 40 ; 40' n'est pas nécessairement solidaire du moyen de réception 1 ; 1'. L'obstacle latéral 40 ; 40' peut notamment être monté sur le boîtier 4, par exemple sur le corps 6 ou le couvercle 7.

A titre de variante, le moyen de réception 1, 1' n'est pas nécessairement formé par une cuve. Le moyen de réception présente de préférence un fond et une paroi latérale. Le moyen de réception peut notamment être formé par un panier ajouré.

A titre de variante, l'élément d'extension périphérique 9 ; 9' peut ménager plusieurs passages supérieurs 19 s'étendant au dessus de l'ouverture supérieure 3.

A titre de variante, l'élément d'extension périphérique 9 ; 9' pourrait être réalisé en matériau souple, notamment en silicone présentant une dureté d'au moins 70 shores, pour contrecarrer la poussée exercée par les aliments.

A titre de variante, l'élément d'extension périphérique 9 ; 9' peut former une portion annulaire s'étendant sur au moins 1/6^{e} de la circonférence du moyen de réception. Si désiré l'élément d'extension périphérique 9 ; 9' peut former un anneau.

A titre de variante, l'élément d'extension périphérique 9 ne s'élève pas nécessairement sur toute la circonférence du moyen de réception 1 au dessus de la partie périphérique 18 du moyen de réception 1.

A titre de variante, l'élément d'extension périphérique 9 ; 9' ne présente pas nécessairement une face inférieure inclinée s'élevant en direction d'une zone centrale du moyen de réception 1 ; 1'. L'élément d'extension périphérique peut alors être simplement posé, notamment sur le moyen de réception 1 ; 1' ou sur le corps 6.

A titre de variante, l'élément d'extension périphérique 9 ; 9' ne forme pas nécessairement une portion annulaire augmentant la hauteur du moyen de réception 1 ; 1'.

A titre de variante l'élément d'extension périphérique 9 ; 9' n'est pas nécessairement monté sur le moyen de réception 1 ; 1', mais peut notamment être monté sur le boîtier 4, par exemple sur le corps 6 ou le couvercle 7.

La présente invention n'est nullement limitée à l'exemple de réalisation décrit et à ses variantes, mais englobe de nombreuses modifications dans le cadre des revendications.

## Revendications

1. Appareil de cuisson d'aliments comprenant un moyen de réception (1 ; 1') prévu pour recevoir les aliments, un moyen de remuage (2 ; 2') disposé au sein du moyen de réception (1 ; 1'), le moyen de réception (1 ; 1') et le moyen de remuage (2 ; 2') étant conçus pour être animés d'un mouvement relatif de rotation, le moyen de réception (1 ; 1') présentant une ouverture supérieure (3), un obstacle latéral (40 ; 40') étant positionné dans le moyen de réception (1 ; 1') en périphérie par rapport au moyen de remuage (2 ; 2'), **caractérisé en ce qu'**un élément d'extension périphérique (9 ; 9') s'élève au dessus d'une partie périphérique (18) du moyen de réception (1 ; 1') et ménage au moins un passage supérieur (19) s'étendant au dessus de l'ouverture supérieure (3), l'élément d'extension périphérique (9 ; 9') présentant une face inférieure inclinée (61) s'élevant en direction d'une zone centrale (17) du moyen de réception (1 ; 1').

2. Appareil de cuisson d'aliments selon la revendication 1, **caractérisé en ce que** l'élément d'extension périphérique (9 ; 9') forme une portion annulaire augmentant la hauteur du moyen de réception (1 ; 1').

3. Appareil de cuisson d'aliments comprenant un moyen de réception (1 ; 1') prévu pour recevoir les aliments, un moyen de remuage (2 ; 2') disposé au sein du moyen de réception (1 ; 1'), le moyen de réception (1 ; 1') et le moyen de remuage (2 ; 2') étant conçus pour être animés d'un mouvement relatif de rotation, le moyen de réception (1 ; 1') présentant une ouverture supérieure (3), un obstacle latéral (40 ; 40') étant positionné dans le moyen de réception (1 ; 1') en périphérie par rapport au moyen de remuage (2 ; 2'), **caractérisé en ce qu'**un élément d'extension périphérique (9 ; 9') est monté dans le prolongement de l'ouverture supérieure (3) du moyen de réception (1 ; 1') et ménage au moins un passage supérieur (19) s'étendant au dessus de l'ouverture supérieure (3), l'élément d'extension périphérique (9 ; 9') formant une portion annulaire augmentant la hauteur du moyen de réception (1 ; 1').

4. Appareil de cuisson d'aliments selon l'une des revendications 1 à 3 **caractérisé en ce que** l'élément d'extension périphérique (9 ; 9') s'étend sur plus de la moitié de la périphérie du moyen de réception (1 ; 1').

5. Appareil de cuisson d'aliments selon l'une des revendications 1 à 4, **caractérisé en ce que** le moyen de réception (1 ; 1') est agencé dans un boîtier (4) définissant un logement (5).

6. Appareil de cuisson d'aliments selon la revendication 5, **caractérisé en ce que** le boîtier (4) comporte un corps (6) surmonté d'un couvercle (7).

7. Appareil de cuisson d'aliments selon la revendication 6, **caractérisé en ce que** l'élément d'extension périphérique (9) s'étend au moins partiellement à l'intérieur du couvercle (7).

8. Appareil de cuisson d'aliments selon l'une des revendications 6 ou 7, **caractérisé en ce que** le couvercle (7) s'étend à distance d'un bord supérieur du moyen de réception (1 ; 1').

9. Appareil de cuisson d'aliments selon l'une des revendications 5 à 8, **caractérisé en ce que** le moyen de réception (1, 1') est monté amovible par rapport au boîtier (4).

10. Appareil de cuisson d'aliments selon l'une des revendications 1 à 9, **caractérisé en ce que** l'élément d'extension périphérique (9 ; 9') est monté sur le moyen de réception (1 ; 1').

11. Appareil de cuisson d'aliments selon l'une des revendications 1 à 10, **caractérisé en ce que** l'élément d'extension périphérique (9) est monté amovible par rapport au moyen de réception (1).

12. Appareil de cuisson d'aliments selon la revendication 11, **caractérisé en ce qu'**il comporte des moyens de retenue (41 ; 45) plaquant l'élément d'extension périphérique (9) contre le moyen de réception (1).

13. Appareil de cuisson d'aliments selon l'une des revendications 11 ou 12, **caractérisé en ce que** l'élément d'extension périphérique (9) présente une gorge interne (53) prévue pour recevoir une collerette extérieure (54) du moyen de réception (1).

14. Appareil de cuisson d'aliments selon l'une des revendications 11 à 13, **caractérisé en ce que** l'élément d'extension périphérique (9) comporte deux parties (50, 51) mobiles l'une par rapport à l'autre.

15. Appareil de cuisson d'aliments selon l'une des revendications 1 à 14, **caractérisé en ce que** le moyen de remuage (2 ; 2') comprend un moyen de soulèvement des aliments (32 ; 32').

16. Appareil de cuisson d'aliments selon la revendication 15, **caractérisé en ce que** l'élément d'extension périphérique (9 ; 9') s'étend entre le moyen de soulèvement des aliments (32 ; 32') et l'obstacle latéral (40 ; 40') lorsque le moyen de soulèvement des aliments (32 ; 32') est disposé en regard de l'obstacle latéral (40 ; 40').

17. Appareil de cuisson d'aliments selon l'une des revendications 15 ou 16, **caractérisé en ce que** l'élément d'extension périphérique (9 ; 9') s'étend au-delà de l'obstacle latéral (40 ; 40') par rapport au moyen de soulèvement des aliments (32 ; 32') lorsque le moyen de soulèvement des aliments (32 ; 32') est disposé en regard de l'obstacle latéral (40 ; 40').

18. Appareil de cuisson d'aliments selon l'une des revendications 1 à 17, **caractérisé en ce que** le moyen de réception (1 ; 1') est formé par une cuve (20) comportant un fond (21) et une paroi latérale (22).

19. Appareil de cuisson d'aliments selon la revendication 18, **caractérisé en ce que** le fond (21) est incliné vers le bas en direction de la paroi latérale (22).

20. Appareil de cuisson d'aliments selon l'une des revendications 1 à 19, **caractérisé en ce qu'**il comporte un moyen de chauffe (10) générant un flux chauffant (11) entrant dans le moyen de réception (1 ; 1') par l'ouverture supérieure (3).

## Claims

1. An appliance for cooking food comprising a reception means (1; 1') designed to receive food, a stirring means (2; 2') arranged within the reception means (1; 1'), the reception means (1; 1') and the stirring means (2; 2') being designed to be moved in a relative movement of rotation, the reception means (1; 1') having an upper opening (3), a lateral obstacle (40; 40') being positioned in the reception means (1; 1') in the periphery in relation to the stirring means (2; 2'), **characterised in that** a peripheral extension member (9; 9') rises above a peripheral portion (18) of the reception means (1; 1') and provides at least one upper passage (19) extending above the upper opening (3), the peripheral extension member (9; 9') having an inclined lower face (61) rising towards a central area (17) of the reception means (1; 1').

2. An appliance for cooking food according to claim 1, **characterised in that** the peripheral extension member (9; 9') forms an annular portion increasing the height of the reception means (1; 1').

3. An appliance for cooking food comprising a reception means (1; 1') designed to receive food, a stirring means (2; 2') arranged within the reception means (1; 1'), the reception means (1; 1') and the stirring means (2; 2') being designed to be moved in a relative movement of rotation, the reception means (1; 1') having an upper opening (3), a lateral obstacle (40; 40') being positioned in the reception means (1; 1') in the periphery in relation to the stirring means (2; 2'), **characterised in that** a peripheral extension member (9; 9') is mounted in the extension of the upper opening (3) of the reception means (1; 1') and provides at least one upper passage (19) extending above the upper opening (3), the peripheral extension member (9; 9') forming an annular portion increasing the height of the reception means (1; 1').

4. An appliance for cooking food according to one of claims 1 to 3, **characterised in that** the peripheral extension member (9; 9') extends over more than half of the periphery of the reception means (1; 1').

5. An appliance for cooking food according to one of claims 1 to 4, **characterised in that** the reception means (1; 1') is arranged inside a casing (4) defining a housing (5).

6. An appliance for cooking food according to claim 5, **characterised in that** the casing (4) comprises a body (6) surmounted by a lid (7).

7. An appliance for cooking food according to claim 6, **characterised in that** the peripheral extension member (9) extends at least partially inside the lid (7).

8. An appliance for cooking food according to one of claims 6 or 7, **characterised in that** the lid (7) extends away from an upper edge of the reception means (1; 1').

9. An appliance for cooking food according to one of claims 5 to 8, **characterised in that** the reception means (1; 1') is mounted removably with respect to the casing (4).

10. An appliance for cooking food according to one of claims 1 to 9, **characterised in that** the peripheral extension member (9; 9') is mounted on the reception means (1; 1').

11. An appliance for cooking food according to one of claims 1 to 10, **characterised in that** the peripheral extension member (9) is mounted removably with respect to the reception means (1).

12. An appliance for cooking food according to claim 11, **characterised in that** it comprises a retaining means (41; 45) pressing the peripheral extension member (9) against the reception means (1).

13. An appliance for cooking food according to one of claims 11 or 12, **characterised in that** the peripheral extension member (9) has an inner groove (53) for receiving an outer flange (54) of the reception means (1).

14. An appliance for cooking food according to one of claims 11 to 13, **characterised in that** the peripheral extension member (9) comprises two portions (50, 51) which move in relation to one another.

15. An appliance for cooking food according to one of claims 1 to 14, **characterised in that** the stirring means (2; 2') comprises a means for lifting the food (32; 32').

16. An appliance for cooking food according to claim 15, **characterised in that** the peripheral extension member (9; 9') extends between the means for lifting the food (32; 32') and the lateral obstacle (40; 40') when the means for lifting the food (32; 32') is arranged opposite the lateral obstacle (40; 40').

17. An appliance for cooking food according to one of claims 15 or 16, **characterised in that** the peripheral extension member (9; 9') extends beyond the lateral obstacle (40; 40') with respect to the means for lifting the food (32; 32') when the means for lifting the food (32; 32') is arranged opposite the lateral obstacle (40; 40').

18. An appliance for cooking food according to one of claims 1 to 17, **characterised in that** the reception means (1; 1') is formed by a vessel (20) comprising a bottom (21) and a side wall (22).

19. An appliance for cooking food according to claim 18, **characterised in that** the bottom (21) is inclined downwards towards the side wall (22).

20. An appliance for cooking food according to one of claims 1 to 19, **characterised in that** it comprises a heating means (10) generating a heating flow (11) entering into the reception means (1; 1') through the upper opening (3).

## Patentansprüche

1. Gerät zum Garen von Lebensmitteln, umfassend ein Aufnahmemittel (1; 1'), das zum Aufnehmen von Lebensmitteln vorgesehen ist, ein Rührmittel (2; 2'), das im Aufnahmemittel (1; 1') angeordnet ist, wobei das Aufnahmemittel (1; 1') und das Rührmittel (2; 2') so ausgeführt sind, dass sie von einer relativen Drehbewegung angetrieben werden, wobei das Aufnahmemittel (1; 1') eine obere Öffnung (3) aufweist, wobei ein seitliches Hindernis (40; 40') im Aufnahmemittel (1; 1') an dessen Rand in Bezug auf das Rührmittel (2; 2') angeordnet ist, **dadurch gekennzeichnet, dass** ein umlaufendes Verlängerungselement (9; 9') über einem umlaufenden Teil (18) des Aufnahmemittels (1; 1') emporragt und wenigstens einen oberen Durchgang (19) beherbergt, der sich über der oberen Öffnung (3) erstreckt, wobei das umlaufende Verlängerungselement (9; 9') eine geneigte Unterseite (61) aufweist, die in Richtung eines Mittelbereiches (17) des Aufnahmemittels (1; 1') emporragt.

2. Gerät zum Garen von Lebensmitteln nach Anspruch 1, **dadurch gekennzeichnet, dass** das umlaufende Verlängerungselement (9; 9') einen ringförmigen Abschnitt bildet, der die Höhe des Aufnahmemittels (1; 1') vergrößert.

3. Gerät zum Garen von Lebensmitteln, umfassend ein Aufnahmemittel (1; 1'), das zum Aufnehmen von Lebensmitteln vorgesehen ist, ein Rührmittel (2; 2'), das im Aufnahmemittel (1; 1') angeordnet ist, wobei das Aufnahmemittel (1; 1') und das Rührmittel (2; 2') so ausgeführt sind, dass sie von einer relativen Drehbewegung angetrieben werden, wobei das Aufnahmemittel (1; 1') eine obere Öffnung (3) aufweist, wobei ein seitliches Hindernis (40; 40') im Aufnahmemittel (1; 1') an dessen Rand in Bezug auf das Rührmittel (2; 2') angeordnet ist, **dadurch gekennzeichnet, dass** ein umlaufendes Verlängerungselement (9; 9') in der Verlängerung der oberen Öffnung (3) des Aufnahmemittels (1; 1') angebracht ist und wenigstens einen oberen Durchgang (19) beherbergt, der sich über der oberen Öffnung (3) erstreckt, wobei das umlaufende Verlängerungselement (9; 9') einen ringförmigen Abschnitt bildet, der die Höhe des Aufnahmemittels (1; 1') vergrößert.

4. Gerät zum Garen von Lebensmitteln nach einem der Ansprüche 1 bis 3, **dadurch gekennzeichnet, dass** sich das umlaufende Verlängerungselement (9; 9') über mehr als die Hälfte des Randes des Aufnahmemittels (1; 1') erstreckt.

5. Gerät zum Garen von Lebensmitteln nach einem der Ansprüche 1 bis 4, **dadurch gekennzeichnet, dass** das Aufnahmemittel (1; 1') in einem Gehäuse (4) angeordnet ist, das eine Aufnahme (5) definiert.

6. Gerät zum Garen von Lebensmitteln nach Anspruch 5, **dadurch gekennzeichnet, dass** das Gehäuse (4) einen Körper (6) umfasst, über dem sich ein Deckel (7) befindet.

7. Gerät zum Garen von Lebensmitteln nach Anspruch 6, **dadurch gekennzeichnet, dass** sich das umlaufende Verlängerungselement (9) wenigstens teilweise im Inneren des Deckels (7) erstreckt.

8. Gerät zum Garen von Lebensmitteln nach einem der Ansprüche 6 oder 7, **dadurch gekennzeichnet, dass** sich der Deckel (7) beabstandet von einem oberen Rand des Aufnahmemittels (1; 1') erstreckt.

9. Gerät zum Garen von Lebensmitteln nach einem der Ansprüche 5 bis 8, **dadurch gekennzeichnet, dass** das Aufnahmemittel (1; 1') in Bezug auf das Gehäuse (4) herausnehmbar angebracht ist.

10. Gerät zum Garen von Lebensmitteln nach einem der Ansprüche 1 bis 9, **dadurch gekennzeichnet, dass** das umlaufende Verlängerungselement (9; 9') auf dem Aufnahmemittel (1; 1') angebracht ist.

11. Gerät zum Garen von Lebensmitteln nach einem der Ansprüche 1 bis 10, **dadurch gekennzeichnet, dass** das umlaufende Verlängerungselement (9) in Bezug auf das Aufnahmemittel (1) abnehmbar angebracht ist.

12. Gerät zum Garen von Lebensmitteln nach Anspruch 11, **dadurch gekennzeichnet**, es Rückhaltemittel (41; 45) umfasst, die das umlaufende Verlängerungselement (9) gegen das Aufnahmemittel (1) drücken.

13. Gerät zum Garen von Lebensmitteln nach einem der Ansprüche 11 oder 12, **dadurch gekennzeichnet, dass** das umlaufende Verlängerungselement (9) eine innere Rille (53) aufweist, die vorgesehen ist, um einen äußeren Kragen (54) des Aufnahmemittels (1) aufzunehmen.

14. Gerät zum Garen von Lebensmitteln nach einem der Ansprüche 11 bis 13, **dadurch gekennzeichnet, dass** das umlaufende Verlängerungselement (9) zwei Teile (50, 51) umfasst, die zueinander beweglich sind.

15. Gerät zum Garen von Lebensmitteln nach einem der Ansprüche 1 bis 14, **dadurch gekennzeichnet, dass** das Rührmittel (2; 2') ein Mittel zum Anheben der Lebensmittel (32; 32') umfasst.

16. Gerät zum Garen von Lebensmitteln nach Anspruch 15, **dadurch gekennzeichnet, dass** sich das umlaufende Verlängerungselement (9; 9') zwischen dem Mittel zum Anheben der Lebensmittel (32; 32') und dem seitlichen Hindernis (40; 40') erstreckt, wenn das Mittel zum Anheben der Lebensmittel (32; 32') gegenüber dem seitlichen Hindernis (40; 40') angeordnet ist.

17. Gerät zum Garen von Lebensmitteln nach einem der Ansprüche 15 oder 16, **dadurch gekennzeichnet, dass** sich das umlaufende Verlängerungselement (9; 9') jenseits des seitlichen Hindernisses (40; 40') in Bezug auf das Mittel zum Anheben der Lebensmittel (32; 32') erstreckt, wenn das Mittel zum Anheben der Lebensmittel (32; 32') gegenüber dem seitlichen Hindernis (40; 40') angeordnet ist.

18. Gerät zum Garen von Lebensmitteln nach einem der Ansprüche 1 bis 17, **dadurch gekennzeichnet, dass** das Aufnahmemittel (1; 1') von einem Behälter (20) gebildet wird, der einen Boden (21) und eine Seitenwand (22) umfasst.

19. Gerät zum Garen von Lebensmitteln nach Anspruch 18, **dadurch gekennzeichnet, dass** der Boden (21) nach unten in Richtung der Seitenwand (22) geneigt ist.

20. Gerät zum Garen von Lebensmitteln nach einem der Ansprüche 1 bis 19, **dadurch gekennzeichnet, dass** es ein Heizmittel (10) umfasst, das einen erhitzenden Strom (11) erzeugt, der in das Aufnahmemittel (1; 1') durch die obere Öffnung (3) eintritt.
